# EUROPÄISCHE PATENTSCHRIFT

(11) **EP 1 402 199 B1**
(45) Veröffentlichungstag und Bekanntmachung des Hinweises auf die Patenterteilung: **25.01.2006**
(21) Anmeldenummer: 02776667.4
(22) Anmeldetag: 10.09.2002
(51) Int. Cl.: F16G 1/16

(54) **ZAHNRIEMEN**
TOOTHED BELT
COURROIE CRANTEE

(30) Priorität: 10.09.2001 DE 10144547
(43) Veröffentlichungstag der Anmeldung: 31.03.2004
(73) Patentinhaber: Arntz Beteiligungs GmbH & Co. KG, 37671 Höxter (DE)
(72) Erfinder: BALLHAUSEN, Ulrich, 33014 Bad Driburg (DE); KING, Gerry, Londonderry BT48 887 (GB)
(74) Vertreter: Sroka, Peter-Christian
(86) Internationale Anmeldenummer: PCT/DE2002/003369
(87) Internationale Veröffentlichungsnummer: WO 2003/023254

(56) Entgegenhaltungen:
- EP-A- 0 092 361
- EP-A- 0 841 500
- DE-A- 4 443 597
- US-A- 3 434 275
- US-A- 3 550 464
- US-A- 5 741 197
- US-A- 5 744 237
- US-A- 5 829 241

## Beschreibung

Die Erfindung betrifft einen Zahnriemen gemäß dem Oberbegriff des Patentanspruches 1.

Zum Stand der Technik gehören z.B. in der EP 0 092 361 B1 beschriebene Zahnriemen, bei denen der Zahnriemenkörper aus Polyurethan mit darin eingebetteten, hochfesten Zugelementen besteht, wobei die innere Umfangsfläche des Riemens und damit die Zähne von einer verschleißbeständigen Gewebe-Verstärkung überdeckt ist bzw. sind. Um eine hohe Lastübertragungsfähigkeit zu erreichen, bestehen die Zugelemente aus einem synthetischen Cord-Material aus schraubenförmig gewendelten Aramid-Fasern, die in Abständen nebeneinander zwischen einer äußeren Schicht des Zahnriemenkörpers und den eine innere Schicht des Zahnriemenkörpers bildenden Zähnen angebracht ist. Um eine ausreichende lastübertragende Bindung zwischen der äußeren Schicht und der inneren, die Zähne umfassenden Schicht zu gewährleisten, belegt der Cord etwa 64% bis etwa 81% der Riemenbreite.

Um eine betriebsbedingte Ermüdung der verwendeten Aramid-Zugelemente zu kompensieren, ist die Ausgangs-Zugfestigkeit dieser Zugelemente überdimensioniert, um auf diese Weise einen für die meisten Anwendungsfälle ausreichenden Zeitrahmen für den Gebrauch dieser Zahnriemen zu erreichen.

Gemäß EP 0 841 500 A2 ist es weiterhin bekannt, für die Zugelemente einen Cord aus Kohlenstofffasern zu verwenden, wobei auch hier durch eine deutliche Überdimensionierung der Zugkraft der Zugelemente eine für die meisten Fälle befriedigende Zeitstandsfestigkeit erreicht wird.

Die in Zahnriemen auftretende hohe Zugbelastung führt u.a. zu einer starken Querbelastung innerhalb der Zugelemente. Diese Beanspruchung wird durch die Struktur des gedrehten Cords noch verstärkt. Durch die gedrehte Form des Cords wird jede Kraft in Längsrichtung auch in eine Kraftkomponente in Querrichtung, also Kontraktion, umgeformt. Auf solche Kräfte reagieren besonders Aramid-Fasem/-Filamente sehr empfindlich. Diese Querkontraktion führt zu einer Schädigung der Fasern, was zu einem schnellen und vorzeitigem Verlust an Zugfestigkeit führt.

### Beschreibung der Erfindung:

Die Erfindung basiert auf der Erkenntnis, daß die Dauerfestigkeit von Zahnriemen durch den Einsatz speziell dafür geeigneter Fasern/Filamente im Cord deutlich verbessert werden kann.

Die Erfindung besteht darin, daß die die Zugelemente bildenden Cordfäden aus Hybridfäden bestehen, die aus einer hochfesten Faserkomponente und eine dämpfänden, elastischen Faserkomponente zusammengesetzt sind.

Neber z.B. hochfesten Aramidfasern als Hauptanteil kann in geringerem Umfang eine dämpfende Faserkomponente in Form von Polyamidfasern/-Filamenten im Cordaufbau verwendet werden, so daß die durch Zug entstehende Querkontraktion gleichmäßig und ohne Kraftspitzen auf den gesamten Faserverbund einwirkt. Durch diese gedämpfte und vergleichsmäßigte Krafteinleitung entstehen geringere Kraftspitzen im Cord, d.h. der empfindliche Aramid-Zugträger wird geringeren Querbelastungen ausgesetzt und ist somit weniger auf Ermüdung beansprucht. Dadurch kann ein Aramid geringerer spezifischer Festigkeit eingesetzt werden, da er im Laufe seiner Anwendung in geringerem Maße an Festigkeit verliert und somit die kritische Festigkeit erst später erreicht.

Besondere Vorteile der mit dieser Hybridfaser hergestellten Riemen sind:

### Gute Haftung

Durch die Einbindung von z.B. Aramidfasern in eine elastische Polyamidmatrix ist die Haftung zum umgebenden PU deutlich verbessert. Dieses führt zu einem verbesserten Zusammenhalt des Riemenverbundes und damit auch in einer wesentlich erhöhten Lebensdauer der so hergestellten Zahnriemen.

### Geringere Ermüdung

Zahnriemen allein mit z.B. nochfestem Aramid als Zugträger bzw. Zugelement haben die ungünstige Eigenschaft, relativ schnell einen erheblichen Abbau an Festigkeit zu verzeichnen. Um dem entgegen zu wirken, wird bisher die Ausgangsfestigkeit der verwendeten Fasern so hoch gelegt, daß innerhalb der zu erwartenden Lebensdauer (z.B. durch Reibung begrenzt) die Festigkeit nicht unter das zulässige Maß absinkt. Die Verwendung von Hybridgarnen aus Aramid- und Polyamidfasem, wie z-B. Twaron TA (hergestellt von Tejn Twaron) erlaubt aber die Verwendung von Aramidfasern mit wesentlich niedrigerem Ausgangsmodul und Ausgangsfestigkeit, da der Abfall dieser Eigenschaften durch die bessere innere Abstützung (und somit Schonung) der Last tragenden Aramidfasern wesentlich verlangsamt und in seinem Umfang reduziert ist.

Bei Einsatz des Hybridgames liegen die Festigkeit und der Ausgangs Modul über weite Bereiche der Nutzungszeit höher als sie bei Hochleistungsaramiden allein liegen.

### Innere Dämpfung

Durch den Verbund von elastischem Polyamid und hochfesten Aramidfasern entsteht eine neuartige Verbundstruktur, welche sich durch eine hohe Dämpfung auszeichnet.

Durch diese Dämpfung wird die innere Reibung und damit Erwärmung verringert, so daß die Wärmeeinwirkung auf das umgebende Polymer reduziert und damit die Lebensdauer des Hybridgarns insgesamt erhöht wird und auf der anderen Seite die thermische Belastung des Aramides reduziert wird. Dies führt wiederum zu der verbesserten Alterungserscheinung des Hybridgames und als Folge zur längeren Lebensdauer der damit hergestellten Zahnriemen.

### Bessere Verarbeitung

Durch den Einsatz von Hybridgarnen wird die Verarbeitung der verschiedenen Komponenten zu einem Hochleistungszahnriemen deutlich verbessert. Die Empfindlichkeit gegenüber mechanischer Beschädigung durch z.B. Knicken, Stoß etc. ist wesentlich verbessert. Auch ist die Haftung im Verarbeitungszustand wesentlich verbessert. Daneben zeigt sich die bessere Schneidbarkeit in einem verbesserten Kantenbild des Riemens, welcher mit Hybridgarn weniger Flusen an der Seite in Folge des Aufschneiden eines Wickels aufweist.

### Verbesserte Beständigkeit gegen Querkontraktion

Zahnriemen bringen durch ihre vielfältige Belastung eine erhebliche Querbeanspruchung auf den Zugträger. Diese ist auch stark wechselnd in ihrer Höhe und Richtung. Solchen Belastungen ist ein Hochleistungsaramid besonders ausgesetzt. Die einzelnen Fasern sind in Querrichtung extrem empfindlich. Dies zeigt sich dann in einem schnellen Festigkeitsabbau des gesamten Riemens. Durch die Einbindung der Aramidfasern in die elastische Polyamidmatrix im Hybridgarn entsteht ein besonders guter Schutz gegen Querbelastung des einzelnen Aramidfadens im Cord. Damit wird die Dauerfestigkeit im praktischen Einsatz wesentlich verbessert.

Gemäß weiterer Erfindung besteht die hochfeste Faserkomponente aus Polyester-Polyacrylat-Fasern bzw. -Filamenten, die durch Schmelzspinnen aus Flüssigkristall-Polymeren hergestellt sind, und/oder aus Polyparaphenylen-2,6-benzabisoxazol-Fasern/-Filamenten, die als PBO-Fasern/-Filamenten bezeichnet werden, wobei der Anteil der Polyester-Polyacrylat-Komponente vorzugsweise zwischen ca. 4 - 96 %, Rest PBO-Komponente, liegt.

Gemäß einer bevorzugten Ausführungsform des Erfindung auf die PBO-Fasern/-Filamente verzichtet, in dem die hochfeste Faserkomponente nur aus Polyester-Polyacrylat-Fasern besteht, die durch Schmelzspinnen aus Flüssigkristall-Polymeren hergestellt sind.

Das für die Herstellung dieser Fasern/Filamente verwendete Polyester-Polyacrylat hat im wesentlichen die folgende Molekularstruktur

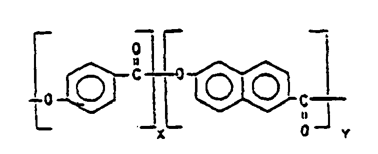

In der folgenden Tabelle sind einige typische Daten solcher Polyester-Polyacrylat-Fasem/-Filamente am Beispiel Vectran ® HS, hergestellt von Celanese Acetate L.L.C., Charlotte, North Carolina (USA), aufgezeigt.

Es zeigt sich, daß besonders die Abriebfestigkeit, welche als Maß für die Ermüdung herangezogen werden kann, bis zu ca. 10 mal höher ausfällt als bei bekannten Aramiden (Para- und Metaaramiden).

Im folgenden sind einige technische Eigenschaften von Fasem/Filamenten aus Polyester-Polyacrylat, entsprechend Vectran HS, und PBO im Vergleich zu reinen Aramidfasern dargestellt:

| | Polyester-Polyacry- verschiedene Aramidfasern zum Vergleich lat-Faser | | | | PBO |
|---|---|---|---|---|---|
| Faser | Vectran HS | Kevlar 29 | Technora T200 | Twaron 1055 | Zylon von Tovobo |
| Denier | 1500 | 1609 | 1512 | 1485 | 500 |
| SpezBruchfestigkeit (g/D) | 23,0 | 19,4 | 24,9 | 21,2 | 40 |
| Bruchdehnung (%) | 2 - 3.3 | 3.6 | 4.2 | 2.6 | 2 - 3 |
| Start Modul (g/D) | 525 | 458 | 574 | 712 | 1200-2100 |
| Abriebbeständig- | 14795 | 1249 | 1681 | 588 | |
| keit (Zyklen) | | | | | - 3750 |

### Geringe Temperaturempfindlichkeit

Die Festigkeit gegenüber Riemen mit Aramid als Zugträger bei einer Temperaturbelastung von 275°C über 24h fällt nur auf 85% des Ursprungs ab, gegenüber 70% bei Aramid.

Es ist praktisch keine Verringerung der Festigkeit bei häufigem Erwärmen und Abkühlen feststellbar. Dies ist eine typische Belastung in anspruchsvoller Umgebung. Aramid zeigt in solchem Falle starke Ermüdungserscheinungen, welche zu einer Reduktion der Ausgangsfestigkeit auf ca. 60% führt.

### Geringe chemische Empfindlichkeit

Besonders in PU-Zahnriemen ist der Cord den aggressiven Medien in der Umgebung ausgesetzt. Er ist besonders an den Flanken nicht geschützt. So führt z.B. der Einsatz von Riemen in Schwimmingpools immer wieder zu Problemen, da das dort eingesetzte Chlor den Zugträger angreift. Hier zeigt sich die Verwendung der o.g. Faser als besonders vorteilhaft, da hier keine Empfindlichkeit gegenüber vielen aggressiven Chemikalien besteht.

### Gute Eigenschaften bei lanzanhaltender hoher Belastung (Kriechen)

Zahnriemen mit z.B. Vectran HS als hochfester Faserkomponente zeigen auch unter hoher, langanhaltender Belastung kein Kriechen. Sie müssen deshalb nicht nachgespannt werden, und die eingesetzten Riemenspanner können enger toleriert werden. Damit ist auch bei Zahnriemen unter hoher Dauerbelastung eine extrem hohe Positioniergenauigkeit erreichbar.

### Gute Biegewechselfestigkeit erhöht die Lebensdauer deutlich

Die Biegewechselfestigkeit von Polyester-Polyacrylat-Fasem ist im Vergleich zu Aramidfasern deutlich besser. Da Antriebs- und Positionierriemen einer permanenten Biegebeanspruchung ausgesetzt sind, ist diese Eigenschaft von besonderer Bedeutung für die Lebensdauer eines Zahnriemens aus PU oder Gummi mit z.B. Vectran HS als Zugträger. Ein vergleichbarer Riemen mit Vectran HS als Zugträger hat nach 3000 Zyklen noch 70% der Ausgangsfestigkeit.

### Dämpfunseigenschaften

Ein mit diesen Polyester-Polyacrylat-Fasern im Zugträger ausgerüsteter Riemen zeigt ein besonders gutes Dämpfungsverhalten im Vergleich zu Riemen mit Aramid. Dies ist direkt ein Vorteil für die Laufruhe insbesondere von Zahnriemen, da diese durch den von den Zähnen hervorgerufenen Polygoneffekt einer ständigen Anregung in verschiedenen Frequenzen unterliegen. Da die Anforderungen an die Laufruhe besonders auch durch steigendes Umweltbewußtsein und damit gestiegenem Interesse an leisen Antrieben an Bedeutung gewinnt, ist dies ein nicht zu unterschätzender Vorteil von Riemen mit solchen Fasern als Zugtrager.

Zur Lösung dieser Aufgabe ist der erfindungsgemäße Treibriemen dadurch gekennzeichnet, daß der Riemenkörper aus einem Polyurethan besteht, das unter Verwendung von 4,4'-Methylen bis (3' chlor-2,6 diethylenanilin) mit der chemischen Formel C₂₁H₂₈Cl₂N₂₋Kurzbezeichnung M-CDEA - polymerisiert worden ist.

Bei diesem Vernetzungsmittel handelt es sich um eine Substanz, die AMES-negativ ist und zusätzlich auch in überraschender Weise zu einer Verbesserung der Riemen-Festigkeit führt.

Bei hinsichtlich des Riemenprofils T10/1000/Breite 16 mm gleichen Riemen mit einer Cordeinlage aus Stahlfasern/-filamenten ergeben sich die aus der folgenden Tabelle ersichtlichen Werte, die sich analog auf anders gestaltete Cordeinlagen übertragen lassen:

| Polyurethan | Drehmoment (Nm) | | | |
|---|---|---|---|---|
| mit | 3 | 5 | 7 | 9 |
| MbOCA | 300 Std. | 300 Std. | 42 Std. | 22 Std. |
| M-CDEA | 300 Std. | 300 Std. | 300 Std. | 300 Std. |

Bei der Verwendung von M-CDEA wird außerdem das ansonsten häufig auftretende Abscheren der Zähne herabgesetzt, wodurch bisher die Synchronität während des Riemenlaufs verschlechtert wurde.

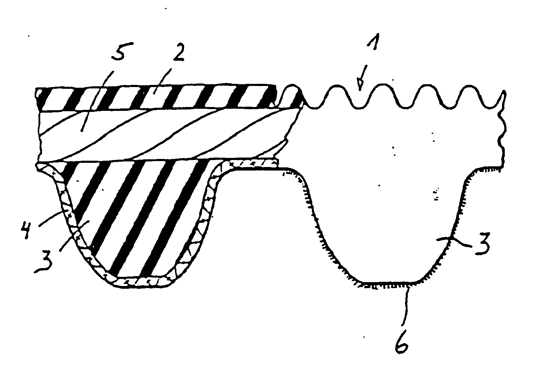

Die Erfindung wird im folgenden an Hand der Zeichnung näher beschrieben, die als Schnittansicht ein Teilstück eines Zahnriemens gemäß EP 0 841 500 A2 zeigt, der in seinem grundsätzlichen Aufbau mit dem erfindungsgemäßen Zahnriemen übereinstimmt.

Wie bei dem bekannten Zahnriemen gemäß EP 0 841 500 A2 hat der Zahnriemen 1 eine äußere Schicht 2 aus gegebenenfalls gewebeverstärktem Polyurethan (PU). An diese äußere Schicht ist eine innere, Zähne 3 bildende Schicht ebenfalls aus Polyurethan angeformt. In den aus den äußeren und inneren Schichten bestehenden Polyurethankörper sind hochfeste Zugelemente (Zugträger) aus schraubenlinienförmig gewickelten Cordfäden 5 eingebettet, die mit seitlichem Abstand voneinander liegen und etwa 64 - 81% der Riemenbreite belegen. Die Zähne 3 sind von einer Materialbahn 4 aus verschleißbeständigem Material bedeckt.

Die Cordfäden 5 sind ausgebildet sein als Hybridfäden mit einer hochfesten Faserkomponente wie Fasern aus der Gruppe von Polyester-Polyacrylat, PBO und Aramid, vorzugsweise in Anteilen von ca. 70 - 95 %, und einer dämpfenden bzw. elastischen Faserkomponente Fasern aus der Gruppe von Polyamid und/oder Polyethylennaphthalat, vorzugsweise in Anteilen von ca. 30 - 5 % (Absatz) Hybridfäden, bestehend aus dem oben beschriebenen Twaron TA und Polyamid, werden bereits für Antriebsriemen mit einer Matrix bzw. einem Riemenkörper aus Gummi, nicht jedoch für Zahnriemen mit einem Polyurethankörper verwendet.

Die die Zähne überdeckende Materialbahn 4 soll bei ausreichender Dehnbarkeit eine hohe Zug-, Druck- und Stoßfestigkeit sowie einen geringen Reibbeiwert und ein gutes Haftvermögen mit dem Polyurethankörper haben.

Zu diesem Zweck besteht die Materialbahn 4 aus einem elastischen Gewebe aus vorzugsweise Polyamidfäden bzw. -fasern sowie Fäden mit geringem Reibbeiwert, vorzugsweise Polytetrafluorethylen (PTFE) -fäden bzw. -fasern (Teflonfasem). Unabhängig von dem Aufbau der Materialbahn kann diese vorzugsweise an der Außenseite auch eine PTFE-Beschichtung aufweisen.

Die Materialbahn 4 kann erfindungsgemäß auch als Verbundkonstruktion aus Kombinationen von Vliesen, Folien und Geweben bestehen, solange sicher gestellt ist, daß diese Verbundkonstruktion ausreichende Dehnbarkeits-, Zug-, und Stoßfestigkeits- sowie Reibbeiwerte aufweist und ein gutes Haftvermögen mit Polyurethan hat. Gemäß einer weiteren Ausführungsform der Erfindung kann die die Zähne überdeckende Materialbahn 4 auch eine Beflockung aufweisen derart, daß das Materialbahngewebe mit einer dünnen Schicht kurzer Faserflocken 6 in vorwiegend senkrechter Ausrichtung zur Materialbahnoberfläche versehen ist, so wie es schematisiert dargestellt ist. Diese Beflockung kann z.B. in einem kontinuierlichen oder diskontinuierlichen Verfahren stattfinden. Das Basisgewebe wird z. B. vor der Verarbeitung auf der Laufflächenseite mit Fasern versehen, konfektioniert und anschließend vulkanisiert, oder der Riemen oder Wickel wird nach den Polymerisieren mit Textilflocken versehen. Ziel ist es, durch die kurzen Fasern eine weitere Schonung des für die Materialbahn 4 verwendeten Gewebes zu erreichen, die Laufruhe des Riemen zu verbessern und dieLebensdauer zu erhöhen.

## Patentansprüche

1. Zahnriemen zur Kraftübertragung, enthaltend
a) einen eine äußere Schicht (2) bildenden Polyurethankörper, an den ebenfalls aus Polyurethan bestehende Zähne (3) als innere Schicht angeformt sind;
b) zwischen der äußeren Schicht (2) und den Zähnen (3) befindliche, hochfeste Zugelemente aus schraubenlinienförmig gewickelten Cordfäden (5), die mit seitlichem Abstand voneinander liegen, und
c) eine die innere Umfangsfläche des Riemens und damit die Zähne (3) überdeckende Materialbahn (4) aus verschleißbeständigem Material,
**dadurch gekennzeichnet, daß** die Cordfäden (5) aus Hybridfäden bestehen, die aus einer hochfesten Faserkomponente und einer dämpfenden, elastischen Faserkomponente zusammengesetzt sind.

2. Zahnriemen nach Anspruch 1, **dadurch gekennzeichnet, daß** die hochfeste Faserkomponente in einem Anteil im Bereich von 70 - 95% und die dämpfende, elastische Faserkomponente in einem Anteil von 5 - 30% vorliegen.

3. Zahnriemen nach Anspruch 1 oder 2, **dadurch gekennzeichnet, daß** die hochfeste Faserkomponente ausgewählt ist, aus der Gruppe von Fasern bestehend aus Polyester-Polyacrylat,
PBO, und Aramid.

4. Zahnriemen nach einem der Ansprüche 1 - 3, **dadurch gekennzeichnet, daß** die dämpfende, elastische Faserkomponente ausgewählt ist aus der Gruppe von Fasern bestehend aus Polyamid und/oder Polyethylennaphthalat.

5. Zahnriemen nach einem der Ansprüche 1 - 4, **dadurch gekennzeichnet, daß** der die äußere Schicht (2) bildende Polyurethankörper gewebeverstärkt ist.

6. Zahnriemen nach Anspruch 3, **dadurch gekennzeichnet, daß** die Polyester-Polyacrylat-Faserkomponente durch Schmelzspinnen aus Flüssigkristall-Polymeren hergestellt ist.

7. Zahnriemen nach Anspruch 3 oder 5, **dadurch gekennzeichnet, daß** das für die Herstellung der Polyester-Polyacrylat-Faserkomponente verwendete Polyester-Polyacrylat die folgende Molekularstruktur hat:

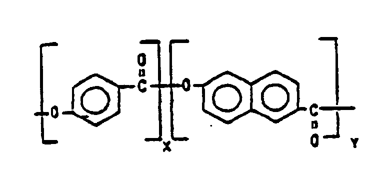

8. Zahnriemen nach Anpruch 3, 6 oder 7, **dadurch gekennzeichnet, daß** die Polyester-Polyacrylat-Fasern Eigenschaften im Bereich der folgenden Werte aufweisen
| | |
|---|---|
| spez.Bruchfestigkeit (g/D) | 23,0 |
| Bruchdehnung (%) | 2 - 3,3 |
| Start Modul (g/D) | 525 |
| Abriebbeständigkeit | höher als 5000 Zyklen. |

9. Zahnriemen nach Anspruch 3, **dadurch gekennzeichnet, daß** die PBO-Fasern Eigenschaften im Bereich der folgenden Werte aufweisen:
| | |
|---|---|
| spez.Bruchfestigkeit (g/D) | 40 |
| Bruchdehnung (%) | 2 - 3 |
| Start Modul (g/D) | 1200-2100 |
| Abriebbeständigkeit (Zyklen) | ca. 3750 |

10. Zahnriemen nach einem der Ansprüche 1 -9 **dadurch gekennzeichnet, daß** die die Zähne (3) überdeckende Materialbahn (4) bei hoher Dehnbarkeit eine hohe Zug- und Stoßfestigkeit sowie einen geringen Reibbeiwert aufweist und ein gutes Haftvermögen mit Polyurethan hat.

11. Zahnriemen nach einem der Anspruch 1-10, **dadurch gekennzeichnet, daß** die Materialbahn (4) aus einem elastischen Gewebe aus Polyamidfäden sowie Fäden bzw. Fasern mit geringem Reibbeiwert besteht.

12. Zahnriemen nach Anspruch 10 oder 11, **dadurch gekennzeichnet, daß** die Materialbahn (4) an der Außenseite eine PTFE-Beschichtung hat.

13. Zahnriemen nach einem der Ansprüche 10-12, **dadurch gekennzeichnet, daß** die Materialbahn (4) als Verbundkonstruktion aus Kombinationen von Vliesen, Folien und Geweben besteht.

14. Zahnriemen nach Anspruch 11, **dadurch gekennzeichnet, daß** die Materialbahn (4) aus elastischem Gewebe mit darin eingearbeiteten Polyteuufluorethylenfäden bzw. -fasern besteht.

15. Zahnriemen nach einem der Ansprüche 10-14 **dadurch gekennzeichnet, daß** das die Materialbahn (4) bildende Gewebe mit einer dünnen Schicht aus kurzen Faserflocken in vorwiegend senkrechter Ausrichtung zur Materialbahnoberfläche beflockt bzw. versehen ist.

16. Zahnriemen nach Anspruch 15, **dadurch gekennzeichnet, daß** die Faserflocken (6) aus verschleißfestem und/oder reibungsarrnen Fasern bestehen.

17. Zahnriemen nach einem oder mehreren der Ansprüche 1- 16, **dadurch gekennzeichnet, daß** der die äußere Schicht (2) und die innere Schicht bildende Riemenkörper aus einem Polyurethan besteht, das unter Verwendung von 4,4'-Methylen (3-chlor-2,6-diethylanilin), polymerisiert worden ist.

## Claims

1. Toothed belt for the transmission of force, containing
a) a polyurethane body that forms an outer layer (2) and on which are formed, as an inner layer, teeth (3) that also consists of polyurethane;
b) high-strength tension elements of spirally wound cord threads (5), which are disposed between the outer layer (2) and the teeth (3) and that are laterally spaced from one another, and
c) a material layer (4) of wear resistant material that covers the inner peripheral surface of the belt and hence the teeth,
**characterized in that** the cord threads (5) consist of hybrid threads, which are composed of a high strength fiber component and a dampening elastic fiber component.

2. Toothed belt according to claim 1, **characterized in that** the high-strength fiber component is present in a portion in the range of 70 - 95 % and the dampening, elastic fiber component is present in a portion in the range of 5 - 30 %.

3. Toothed belt according to claim 1 or 2, **characterized in that** the high-strength fiber component is selected from the group of fibers consting of polyester-polyacrylate, PBO and aramide.

4. Toothed belt according to one of the claims 1 - 3 **characterized in that** the damping, elastic fiber component is selected from the group of fibers consisting of polyamide and/or polyethylenenaphthalate.

5. Toothed belt according to one of the claims 1 - 4 **characterized in that** the polyurethane body that forms the outer layer is fabric-reinforced.

6. Toothed belt according to claim 3, **characterized in that** the polyester-polyacrylate-fiber component is produced by fusion spinning from liquid crystal polymers.

7. Toothed belt according to claim 3 or 5, **characterized in that** the polyester-polyacrylate used for the production of the polyester-polyacrylate-fiber component has the following molecular structure:

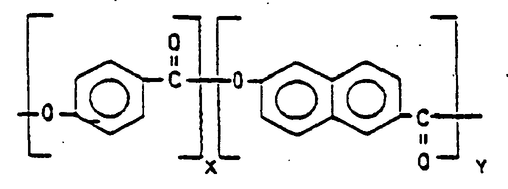

8. Toothed belt according to claim 3, 6 or 7, **characterized in that** the polyester-polyacrylate fibers have characteristics in the range of the following values
| | |
|---|---|
| Spec. Strength (g/D) | 23.0 |
| Elongation (%) | 2-3.3 |
| Start Modulus (g/D) | 525 |
| Resistance to Wear | greater than 5000 cycles |

9. Toothed belt according to claim 3, **characterized in that** the PBO-fibers have characteristics in the range of the following values
| | |
|---|---|
| Spec. Strength (g/D) | 40 |
| Elongation (%) | 2 - 3 |
| Start Modulus (g/D) | 1200-2100 |
| Resistance to Wear | about 3750 |

10. Toothed belt according to one of the claims 1 - 9, **characterized in that** the material layer (4) that covers the teeth (3) has, accompanied by adequate flexibility, a high resistance to tension, pressure and impact as well as a low coefficient of friction and a good adhesion with polyurethane.

11. Toothed belt according one of the claims 1 - 10, **characterized in that** the material layer (4) is comprised of an elastic fabric of polyamide fibers as well as threads or fibers having a low coefficient of friction.

12. Toothed belt according claim 10 or 11, **characterized in that** the outer side of the material layer (4) has a PTFE-coating.

13. Toothed belt according to the claims 10 to 12, **characterized in that** the material layer (4) consists as a composite construction of combinations of fleeces, foils and fabrics.

14. Toothed belt according to claim 11, **characterized in that** the material layer (4) consists of an elastic fabric having polytetrafluoroethylene threads or fibers that are incorporated therein.

15. Toothed belt according to one of the claims 10 - 14, **characterized in that** the fabric that forms the material layer (4) is flocked or provided with a thin layer of short fiber flocks in a predominantly perpendicular orientation relative to the surface of the material layer.

16. Toothed belt according to claim 15, **characterized in that** the fiber flocks (6) are comprised of wear resistant and/or low friction fibers.

17. Toothed belt according to one or more of the claims 1-16, **characterized in that** the belt body that forms the outer layer (2) is comprised of a polyurethane that was polymerized using 4, 4' methylene (3-chloro-2,6-diethyleaniline).

## Revendications

1. Courroie dentée pour la transmission de force, comprenant
a) un corps de polyuréthane formant une couche extérieure (2), sur lequel sont rapportées par formage des dents également en polyuréthane (3) comme couche intérieure ;
b) des éléments de traction hautement résistants se trouvant entre la couche extérieure (2) et les dents (3), éléments constitués de fils de corde (5) enroulés en forme d'hélice, lesquels sont situés à une distance latérale les uns des autres, et
c) une bande de matière (4) constituée d'un matériau résistant à l'usure, recouvrant la surface périphérique intérieure de la courroie et donc les dents (3), **caractérisée en ce que** les fils de corde (5) comprennent des fils hybrides qui se composent d'un composant fibreux hautement résistant et d'un composant fibreux élastique amortisseur.

2. Courroie dentée selon la revendication 1, **caractérisée en ce que** le composant fibreux hautement résistant est présent dans une proportion comprise entre 70 et 95 % et le composant fibreux élastique amortisseur dans une proportion comprise entre 5 et 30 %.

3. Courroie dentée selon la revendication 1 ou 2, **caractérisée en ce que** le composant fibreux hautement résistant est choisi parmi le groupe de fibres se composant de polyester polyacrylate, de PBO et d'aramide.

4. Courroie dentée selon l'une des revendications 1 à 3, **caractérisée en ce que** le composant fibreux élastique amortisseur est choisi parmi le groupe de fibres se composant de polyamide et/ou de polyéthylène naphtalate.

5. Courroie dentée selon l'une des revendications 1 à 4, **caractérisée en ce que** le corps de polyuréthane formant la couche extérieure (2) est renforcé structurellement.

6. Courroie dentée selon la revendication 3, **caractérisée en ce que** le composant fibreux en polyester polyacrylate est fabriqué par filage à chaud à partir de polymères cristal liquide.

7. Courroie dentée selon la revendication 3 ou 5, **caractérisée en ce que** le polyester polyacrylate utilisé pour la fabrication du composant fibreux en polyester polyacrylate a la structure moléculaire suivante :

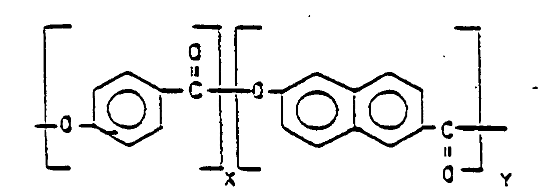

8. Courroie dentée selon la revendication 3, 6 ou 7, **caractérisée en ce que** les fibres polyester polyacrylate comportent des propriétés situées dans la plage des valeurs suivantes :
| | |
|---|---|
| Résistance spéciale à la rupture | 23,0 |
| Allongement de rupture (%) | 2 - 3,3 |
| Module départ (g/D) | 525 |
| Résistance à l'usure | supérieure à 5000 cycles |

9. Courroie dentée selon la revendication 3, **caractérisée en ce que** les fibres PBO comportent des propriétés situées dans la plage.des valeurs suivantes :
| | |
|---|---|
| Résistance spéciale à la rupture (g/D) | 40 |
| Allongement de rupture (%) | 2 - 3 |
| Module départ (g/D) | 1200-2100 |
| Résistance à l'usure (cycles) | 3750 env. |

10. Courroie dentée selon l'une des revendications 1 ou 9, **caractérisée en ce que** la bande de matière (4) recouvrant les dents (3) a pour une extensibilité élevée une résistance élevée à la traction et au choc ainsi qu'un faible coefficient de frottement et une bonne adhésivité avec le polyuréthane.

11. Courroie dentée selon l'une des revendications 1 à 10, **caractérisée en ce que** la bande de matière (4) se compose d'un tissu élastique constitué de fibres en polyamide ainsi que de brins et/ou fibres au faible coefficient de frottement.

12. Courroie dentée selon la revendication 10 ou 11, **caractérisée en ce que** la bande de matière (4) a un revêtement PTFE sur le côté extérieur.

13. Courroie dentée selon l'une des revendications 10 à 12, **caractérisée en ce que** la bande de matière (4) en tant que construction mixte se compose d'une combinaison de non-tissés, de films et de tissus.

14. Courroie dentée selon la revendication 11, **caractérisée en ce que** la bande de matière (4) se compose d'un tissu élastique avec des fils et/ou fibres de polytétrafluoroéthylène incorporés à l'intérieur du tissu.

15. Courroie dentée selon l'une des revendications 10 à 14, **caractérisée en ce que** le tissu formant la bande de matière (4) est floqué et/ou pourvu d'une fine couche de petits flocons de fibres dans une orientation principalement perpendiculaire à la surface de la bande de matière.

16. Courroie dentée selon la revendication 15, **caractérisée en ce que** les flocons de fibres (6) se composent de fibres résistantes à l'usure et/ou à faible coefficient de frottement.

17. Courroie dentée selon l'une ou plusieurs des revendications 1 à 16, **caractérisée en ce que** le corps de courroie formant la couche extérieure (2) et la couche intérieure se compose d'un polyuréthane qui a été polymérisé en utilisant du méthylène 4,4' (3-chloro-2,6-diéthylaniline).
